# EUROPÄISCHE PATENTANMELDUNG

(11) **EP 1 787 802 A1**
(43) Veröffentlichungstag der Anmeldung: **23.05.2007**
(21) Anmeldenummer: 06122748.4
(22) Anmeldetag: 23.10.2006
(51) Int. Cl.: B32B 25/06, B29C 37/00

(54) **Folie mit Deckschicht aus einer Polyamidzusammensetzung**

(30) Priorität: 26.10.2005 DE 102005051126
(71) Anmelder: Degussa GmbH, 40474 Düsseldorf (DE)
(72) Erfinder: Wursche, Roland, 48249, Dülmen (DE); Baumann, Franz-Erich, 48249, Dülmen (DE); Küting, Beatrice, 45772, Marl (DE); Wielpütz, Martin, 48308, Senden (DE); Kreidler, Patrick, 45663, Recklinghausen (DE); Häger, Harald, 63579, Freigericht (DE)

(57) **Zusammenfassung**

Eine Dekorfolie, deren Deckschicht aus einer Polyamidzusammensetzung besteht, die folgende Komponenten enthält:
a) 50 - 100 Gew.-Teile Polyamid, das aus folgenden Monomeren herstellbar ist:
α ) 70 - 100 Mol-% Diamin, ausgewählt aus m-Xylylendiamin, p-Xylylendiamin und Mischungen hiervon,
β ) 0-30 Mol-% anderer Diamine mit 6 bis 14 C-Atomen,
wobei sich die Mol-%-Angaben hier auf die Summe an Diamin beziehen, sowie
γ ) 70 - 100 Mol-% aliphatischer Dicarbonsäuren mit 10 bis 18 C-Atomen und
δ ) 0 - 30 Mol-% anderer Dicarbonsäuren mit 6 bis 9 C-Atomen,
wobei sich die Mol-%-Angaben hier auf die Summe an Dicarbonsäure beziehen;

b) 0 - 50 Gew.-Teile eines anderen Polyamids,

wobei sich die Gewichtsteile von a) und b) zu 100 addieren,
weist eine gute Chemikalien- und Spannungsrissbeständigkeit sowie eine verbesserte Kratzfestigkeit und einen verbesserten Glanz auf. Typische Anwendungsbereiche sind der Automobilbau sowie die Verwendung als Oberbelag für Skier oder Snowboards.

## Beschreibung

Die vorliegende Erfindung hat eine Folie zum Gegenstand, die eine Schicht aus einem Polyamid enthält und zur Dekoration von Formteilen geeignet ist.

Formmassen aus der Klasse der Polyamide besitzen günstige Eigenschaften zur Herstellung verschiedenster Gebrauchsgegenstände. Insbesondere ist die Kombination dieser Eigenschaften mit dem Merkmal Transparenz von Interesse, wodurch sich die Möglichkeit zur Herstellung transparenter Folien eröffnet, die zur Veredelung oder Dekoration von Oberflächen verwendet werden können. Als Materialien kommen hier vor allem Polyamide mit längerkettigen aliphatischen Monomerkomponenten in Frage, da hier besondere Schlagzähigkeit, auch bei tiefen Temperaturen, gute Chemikalienresistenz und eine ausreichend gute Kratzfestigkeit und ausreichender Glanz vorhanden sind. Beispiele sind hier PA12, PA11, PA1010, PA1012 oder deren Blends.

Derartige Eigenschaften sind beispielsweise relevant für Anwendungen als Material für Deckschichten im Ski- und Snowboard-Bereich. Beispiele finden sich im Artikel von M. Beyer und J. Lohmar, Kunststoffe 90 (2000) 1, S. 98 - 101, wo bedruckbare Folien aus PA12-Formmassen vorgestellt werden.

Ein anderes Beispiel bietet das Gebrauchsmuster DE 295 19 867 U1. Dieses beschreibt eine dekorierbare Folie aus einem Copolyamid, das aus den Monomereinheiten Laurinlactam sowie Caprolactam und/oder Hexamethylendiamin/Dicarbonsäure aufgebaut ist. Derartige Copolyamide sind zwar im allgemeinen transparent und sie sind auch gut dekorierbar, allerdings treten bei der Herstellung von Formteilen oder Folien aus solchen Copolyamiden durch Extrusion immer wieder Probleme auf. Insbesondere bilden sich - wie bei den vorangehend genannten Systemen - Beläge am Spritzguss- oder Extrusionswerkzeug oder an den Abzugswalzen, die eine häufige Unterbrechung der Produktion wegen der nötigen Reinigungsarbeiten verursachen. Darüber hinaus ist die Wärmeformbeständigkeit derartiger Folien unzureichend, weshalb beim Dekorieren mittels Sublimations- oder Thermodiffusionsdruck die Gefahr der Verformung besteht. Man muss daher bei niedrigerer Temperatur dekorieren, als bei diesen Verfahren eigentlich wünschenswert wäre.

Von genereller Wichtigkeit für eine Materialauswahl für das genannte Anwendungsgebiet ist neben einer geringen Belagsbildung und einer guten Wärmeformbeständigkeit, dass zusätzlich zu einer ausreichenden Transparenz gleichzeitig eine bestimmte Kristallinität gegeben ist. Dies ist von Bedeutung für die Resistenz des Materials gegenüber Chemikalien, die sich hier beispielsweise in zufriedenstellender Spannungsrissbeständigkeit äußert, wenn das Material bedruckt wird (Druckfarbe) oder mit Reinigungsmitteln in Kontakt gerät.

Eine wünschenswerte Verbesserung gegenüber dem oben zitierten Stand der Technik wäre es jedoch, wenn eine Steigerung hinsichtlich Kratzfestigkeit und Glanz erreicht würde.

Weiter können Polyamide auch als Deckschichten von Lackersatzfolien im Fahrzeugbereich eingesetzt werden. Das derzeitige Standardverfahren zur Dekoration von Außenflächen an Automobilen ist das Lackieren. Diese Vorgehensweise verursacht jedoch zum einen hohe Fertigungskosten, die durch die Vorhaltung eines spezifischen Maschinenparks und den verbundenen Bedienaufwand beim Automobilhersteller bedingt sind, zum anderen wird hierdurch die Umwelt belastet. Eine Umweltbelastung resultiert beispielsweise aus freiwerdenden Lösungsmittelbestandteilen der eingesetzten Lacke sowie aus dem Anfall von Farbresten, die einer geordneten Entsorgung zugeführt werden müssen. Ferner kommt hinzu, dass das Lackieren nur in begrenztem Maße geeignet ist, die Oberflächen von Kunststoffbauteilen zu dekorieren, die in den letzten Jahren im Automobilbau wegen der Gewichts- und Kostenersparnis an Beliebtheit gewonnen haben.

Der Lackierprozess von Kunststoffbauteilen als Komponenten der Karosserie ist beispielsweise online führbar, wobei das Kunststoffteil der gleichen Lackierbehandlung unterzogen wird wie die metallischen Komponenten. Dies führt zu einer einheitlichen Farbe, bringt aber infolge der hier üblichen kathodischen Tauchlackierung hohe Temperaturen mit sich, die die Materialauswahl erschweren. Außerdem muss eine Haftung der Lackrezeptur in gleicher Weise auf den sehr unterschiedlichen Substraten gewährleistet sein. Wird der Lackierprozess der Kunststoffteile in einem separaten Schritt (sogenannte offline-Lackierung) durchgeführt, der für Kunststoffe günstigere Prozessbedingungen beinhaltet, tritt die Problematik des color-matching auf, das heißt, der am Metall realisierte Farbton muss genau getroffen werden. Dies ist jedoch aufgrund der Unterschiede in Substrat, verwendbarer Basislackrezeptur und Prozessbedingungen sehr schwierig zu erreichen. Im Falle einer durch das Design vorgegebenen Farbdifferenz bleibt als gravierender Nachteil die Vorhaltung einer zweiten Lackiereinrichtung für die Kunststoffteile und der damit verbundene Aufwand, wobei auch ein zusätzlicher Zeitbedarf für die Fertigung des Automobils einzubeziehen ist. Die direkte Verwendung der unbehandelten, in der Regel spritzgegossenen Kunststoffteile ist unter ästhetischen Gesichtspunkten unvorteilhaft, da hier prozessbedingte Fehler der Oberfläche, wie etwa Bindenähte, Lufteinschlüsse, aber auch notwendige verstärkende Füllstoffe wie Glasfasern deutlich wahrnehmbar sind. Dies ist im Sichtbereich nicht tolerabel. Folglich muss eine Verbesserung der Oberflächenqualität vorgenommen werden, beispielsweise im Zuge einer Lackierung, wobei oft eine arbeitsintensive Vorbehandlung durch Schleifen und die Aufbringung eines Primers in dickeren Schichten nötig wird.

Ein Vorschlag zur Abhilfe besteht in der Verwendung von mehrschichtigen Kunststofffolien, die zur Abdeckung der Bauteile eingesetzt werden und nicht mehr lackiert werden müssen. Der Verbund zwischen Substrat und dekorierender Folie kann hierbei durch eine Reihe von Fertigungsverfahren realisiert werden. Die Folie kann beispielsweise mit dem Substrat verpresst werden oder man wählt ein Hinterspritzverfahren, bei dem die Folie bei der Bauteilherstellung in das Spritzgießwerkzeug eingelegt wird. Das Konzept einer Folie als Dekorträger kommt darüber hinaus einem Trend zur Individualisierung gestalterischer Elemente am Automobil entgegen. Diese Tendenz führt nämlich in der Fertigung zu einer größeren Palette von Modellen, die aber in der Anzahl der jeweils gefertigten Bauteile pro Serie reduziert ist. Da der Einsatz von Folien schnelle, problemlose Designwechsel erlaubt, kann dieser Herausforderung hiermit begegnet werden. Wichtig ist hierbei, dass durch die Folie die in der Automobilindustrie geforderten Standards hinsichtlich Oberflächeneigenschaften (Class A Oberfläche), Beständigkeit gegenüber Medien und optischem Eindruck erfüllt werden. Auch in der Gestaltung von Innenoberflächen im Automobil sind solche Folien gut einsetzbar.

Derartige Dekorfolien sind im Prinzip bekannt. Die EP 0 949 120 A1 beispielsweise beschreibt Dekorfolien mit einer transparenten Deckschicht aus Polyurethan, Polyacrylat, Fluorpolymer oder Mischungen aus Fluorpolymer und Polyacrylat. Ähnliche Dekorfolien sind auch aus der WO 94/03337 und der EP 0 285 071 A2 bekannt.

Aufgrund ihres Eigenschaftsprofils, beispielsweise Schlagzähigkeit und Chemikalienbeständigkeit, sind Polyamide, insbesondere Polyamide auf Basis von PA12 oder PA11, ganz allgemein für die Herstellung derartiger Dekorfolien gut geeignet. Dementsprechend finden sich in der Patentliteratur Beschreibungen von Dekorfolien oder auch Schutzfolien, die eine Deckschicht aus einem Polyamid enthalten. Zu nennen sind hier beispielsweise die Schriften JP60155239A, JP2003118055A, EP 1 302 309 A, EP 0 522 240 A, EP 0 694 377 A, EP 0 734 833 A, WO 9212008 A und EP 0 568 988 A.

Während Deckschichten aus Polyamiden mit hoher Carbonamidgruppendichte aufgrund der hohen Polarität eine ungenügende Chemikalienbeständigkeit und zu hohe Wasseraufnahme besitzen, zeigt sich in der Praxis, dass bei der Verwendung von Polyamiden mit niedriger Carbonamidgruppendichte, die aus Lactamen bzw. den entsprechenden Aminocarbonsäuren hergestellt wurden (AB-Polyamide), unter Umgebungsbedingungen im Laufe der Zeit Beläge auf der Oberfläche der Folien gebildet werden, die den Glanz erheblich herabsetzen und für diese Anwendung nicht tolerierbar sind. Derartige Polyamide wie z.B. PA11 oder PA12 weisen darüber hinaus eine unzureichende Kratzbeständigkeit auf. Zudem ist ihr Glanz verbesserungswürdig.

Folglich bestand die Aufgabe, eine einschichtige oder mehrschichtige Folie zu Dekorzwecken zur Verfügung zu stellen, deren eine oder oberste Schicht (beides im Folgenden als Deckschicht bezeichnet) aus einer Polyamidzusammensetzung besteht, die eine gute Chemikalienbeständigkeit und Spannungsrissbeständigkeit sowie eine verbesserte Kratzfestigkeit besitzt, die keine Neigung zur Bildung von Belägen aufweist und die einen verbesserten Glanz besitzt, um den gesteigerten ästhetischen Ansprüchen an die Oberfläche auch nach längerem Gebrauch nachzukommen. Dabei muss die Deckschicht ausreichend transparent sein, so dass ein ausreichend konturscharfes Hinterdrucken möglich ist.

Diese Aufgabe wurde durch eine ein- oder mehrschichtige Dekorfolie gelöst, deren Deckschicht aus einer Polyamidzusammensetzung besteht, die folgende Komponenten enthält:
a) 50 - 100 Gew.-Teile, bevorzugt 60 - 98 Gew.-Teile, besonders bevorzugt 70 - 95 Gew.-Teile und insbesondere bevorzugt 75 - 90 Gew.-Teile Polyamid, das aus folgenden Monomeren herstellbar ist:
   α) 70 - 100 Mol-%, bevorzugt 75 - 99 Mol-%, besonders bevorzugt 80 - 98 Mol-% und insbesondere bevorzugt 85 - 97 Mol-% m- und/oder p-Xylylendiamin und
   β) 0 - 30 Mol-%, bevorzugt 1 - 25 Mol-%, besonders bevorzugt 2 - 20 Mol-% und insbesondere bevorzugt 3 - 15 Mol-% anderer Diamine mit 6 bis 14 C-Atomen,
      wobei sich die Mol-%-Angaben hier auf die Summe an Diamin beziehen, sowie
   γ) 70 - 100 Mol-%, bevorzugt 75 - 99 Mol-%, besonders bevorzugt 80 - 98 Mol-% und insbesondere bevorzugt 85 - 97 Mol-% aliphatischer Dicarbonsäuren mit 10 bis 18 C-Atomen und
   δ) 0 - 30 Mol-%, bevorzugt 1 - 25 Mol-%, besonders bevorzugt 2 - 20 Mol-% und insbesondere bevorzugt 3 - 15 Mol-% anderer Dicarbonsäuren mit 6 bis 9 C-Atomen,
   wobei sich die Mol-%-Angaben hier auf die Summe an Dicarbonsäure beziehen;
b) 0 - 50 Gew.-Teile, bevorzugt 2 - 40 Gew.-Teile, besonders bevorzugt 5 - 30 Gew.-Teile und insbesondere bevorzugt 10 - 25 Gew.-Teile eines anderen Polyamids, vorzugsweise eines Polyamids mit im Mittel mindestens 8 C-Atomen in den Monomereinheiten,
wobei sich die Gewichtsteile von a) und b) zu 100 addieren.

Die Polyamidzusammensetzung kann darüber hinaus maximal 20 Gew.-%, maximal 16 Gew.-%, maximal 12 Gew.-%, maximal 8 Gew.-% oder maximal 4 Gew.-% an Hilfs- oder Zusatzstoffen enthalten, wobei sich die Gew.-%-Angaben auf die gesamte Polyamidzusammensetzung beziehen.

Das unter a) β) gegebenenfalls mitverwendete andere Diamin kann beispielsweise 1.6-Hexamethylendiamin, 1.8-Octamethylendiamin, 1.9-Nonamethylendiamin, 1.10-Decamethylendiamin, 1.12-Dodecamethylendiamin, 1.14-Tetradecamethylendiamin, 1.4-Cyclohexandiamin, 1.3- oder 1.4-Bis(aminomethyl)hexan, 4.4'-Diaminodicyclohexylmethan und/oder Isophorondiamin sein.

Die Dicarbonsäure der Komponente a) γ) ist vorzugsweise linear. Beispielweise sind 1.10-Decandisäure, 1.11-Undecandisäure, 1.12-Dodecandisäure, 1.13-Tridecandisäure, 1.14-Tetradecandisäure, 1.16-Hexadecansäure und 1.18-Octadecansäure geeignet, wobei 1.12-Dodecandisäure und 1.14-Tetradecandisäure bevorzugt sind. Es können auch Gemische verwendet werden.

Die unter a) δ) gegebenenfalls mitverwendete andere Dicarbonsäure ist beispielsweise Adipinsäure, Korksäure, 1.9-Nonandisäure, 1.4-Cyclohexandicarbonsäure, Isophthalsäure und/oder Terephthalsäure.

In einer bevorzugten Ausführungsform enthält das Polyamid gemäß a) im wesentlichen keine Monomereinheiten, die von einer Komponente a) β) herrühren.

In einer weiteren bevorzugten Ausführungsform enthält das Polyamid gemäß a) im wesentlichen keine Monomereinheiten, die von einer Komponente a) δ) herrühren.

Weiterhin ist bevorzugt, dass die Monomereinheiten, die sich von der Komponente a) γ) herleiten, von einer einzigen Dicarbonsäure herrühren, da Gemische von Dicarbonsäuren zwar eine höhere Transparenz des Polyamids ergeben; dies führt aber zu Einbußen bei der Chemikalienbeständigkeit.

In einer möglichen Ausführungsform der Erfindung ist die Komponente a) α) zusammengesetzt aus
- mindestens jeweils 50 Gew.-%, 60 Gew.-%, 70 Gew.-%, 75 Gew.-%, 80 Gew.-%, 85 Gew.-%, 90 Gew.-% oder 95 Gew.-% an m-Xylylendiamin und
- maximal jeweils 50 Gew.-%, 40 Gew.-%, 30 Gew.-%, 25 Gew.-%, 20 Gew.-%, 15 Gew.-%, 10 Gew.-% oder 5 Gew.-% an p-Xylylendiamin.

In einer weiteren möglichen Ausführungsform der Erfindung ist die Komponente a) α) zusammengesetzt aus
- mehr als 50 Gew.-% bzw. mindestens jeweils 60 Gew.-%, 70 Gew.-%, 75 Gew.-%, 80 Gew.-%, 85 Gew.-%, 90 Gew.-% oder 95 Gew.-% an p-Xylylendiamin und
- weniger als 50 Gew.-% bzw. mindestens jeweils 40 Gew.-%, 30 Gew.-%, 25 Gew.-%, 20 Gew.-%, 15 Gew.-%, 10 Gew.-% oder 5 Gew.-% an m-Xylylendiamin.

Die Komponente a) kann aus einer Mischung zweier oder mehrerer unterschiedlicher Polyamide bestehen, die für sich gesehen jeweils die unter a) beschriebene Zusammensetzung besitzen.

Das Polyamid gemäß b) kann zwar z B. PA6 oder PA66 sein, jedoch sind höhere Polyamide mit im Mittel mindestens 8 C-Atomen in den Monomereinheiten wie z. B. PA88, PA610, PA612, PA614, PA810, PA812, PA814, PA1010, PA1012, PA1014, PA1212, PA11 oder PA 12 bevorzugt. Weiterhin ist bevorzugt, dass sich das Polyamid gemäß b) von einem Diamin herleitet, das dem Xylylendiamin sterisch ähnlich ist, d. h. dass die hieraus gebildeten Monomereinheiten eine ähnliche Länge besitzen, was etwa beim Hexamethylendiamin der Fall ist. Darüber hinaus ist es vorteilhaft, wenn sich das Polyamid gemäß b) von der gleichen oder einer ähnlichen Dicarbonsäure herleitet wie das Polyamid a). In diesen Fällen können am einfachsten weitgehend transparente Blends erhalten werden.

Die Polyamidzusammensetzung kann zusätzlich folgende weitere Komponenten enthalten:
a) Nukleierungsmittel, ausgewählt aus nanoskaligen Füllstoffen und basischen Metallsalzen, Metalloxiden oder Metallhydroxiden; letztere werden, um die gewünschte Transparenz sicherzustellen, höchstens in einer solchen Menge zugesetzt, wie sie in der Schmelze unter Reaktion mit den Carboxylendgruppen der Polyamide gelöst werden können;
b) übliche Hilfs- bzw. Zusatzstoffe in den für Polyamidformmassen üblichen Mengen, beispielweise Stabilisatoren, UV-Absorber oder Gleitmittel,
c) Farbmittel, die die Transparenz nicht signifikant beeinflussen,
d) Füllstoffe, deren Brechungsindex sich nur in geringem Maße von dem der Matrix unterscheidet oder genau übereinstimmt (isorefraktive Füllstoffe),
e) weitere Polymerkomponenten, deren Brechungsindex sich nur in geringem Maße von dem der Matrix unterscheidet oder genau übereinstimmt sowie
f) Nukleierungsmittel auf Basis organischer Verbindungen, die die Transparenz im Wesentlichen nicht beeinflussen.

Polykondensate auf der Basis von Xylylendiaminen sind in der Literatur bekannt. Dies schließt auch die Verwendung von Dodecandisäure als Disäure ein (beispielsweise US 3 803 102 und US 4 433 136). Polyamide mit der Grundstruktur MXD6 oder MXD12 werden für die Herstellung von Folien im Verpackungsbereich eingesetzt (beispielsweise EP-A-1 172 202, US 5 955 180, EP-A-0 941 837, WO 00/23508). Diese Folien können auch mehrschichtig sein. FR-A-2 740 385 schließlich beschreibt eine Dekorfolie mit einer transparenten, bedruckbaren Deckschicht aus einem Polyamid, einer zweiten Schicht aus einem (funktionalisierten) Polyolefin und einer dritten Schicht aus einem faserbasierenden, nicht gewebten Material. In den Ansprüchen ist auch Polyamid MXD6 als Material für die Deckschicht genannt. Neben der Verwendung zur Dekoration von Sportartikeln, zum Beispiel Ski, Sanitärartikeln, Möbeln ist auch pauschal der Einsatz in Automobilen genannt. Aufgrund der hohen Wasseraufnahme des Polyamid MXD6 ist eine derartige Konstruktion für Anwendungen im Automobilbereich, insbesondere als Lackersatz, jedoch nicht geeignet, da wässrige Lösungen von relevanten Chemikalien, z. B. Pankreatin, in die Deckschicht eindringen und diese schädigen können (der Pankreatintest dient der Simulation der Einwirkung von Vogelkot).

Die Verwendung der erfindungsgemäßen Polyamidzusammensetzungen zur Herstellung von kratzfesten Dekor- oder Lackersatzfolien und der hier spezifisch vorteilhafte Folienaufbau sind bis jetzt in der Literatur nicht beschrieben. Ebenso sind die spezifischen Vorteile der erfindungsgemäßen Zusammensetzungen für den Ski- und Snowboard-Bereich bislang nicht bekannt.

Dekorfolien im Sinne der Erfindung sind Folien, die bedruckt werden können und/oder eine Farbschicht enthalten und darüber hinaus dazu bestimmt sind, mit einem Substrat verbunden zu werden, um dessen Oberfläche zu dekorieren. Die Dekoration kann auch dadurch bewirkt werden, dass optische Mängel der Oberfläche kaschiert werden, z. B. indem eine von Füll- oder Verstärkungsstoffen herrührende Oberflächenrauhigkeit abgedeckt wird.

Die erfindungsgemäße Dekorfolie ist einschichtig oder mehrschichtig. Bei einer mehrschichtigen Ausführung richten sich die Art und Zahl der übrigen Schichten nach den anwendungstechnischen Erfordernissen; entscheidend ist nur, dass die Deckschicht aus der erfindungsgemäß verwendeten Formmasse besteht. Beispielsweise sind folgende Ausführungsformen möglich:
1. Die Folie ist einschichtig. Sie besteht in diesem Fall definitionsgemäß nur aus der Deckschicht; durch Bedrucken z. B. mittels Thermosublimationsdruck können entweder auf der Oberseite oder der Unterseite Dekore angebracht werden.
2. Die Folie enthält neben der Deckschicht eine untenliegende Farbschicht. Die Farbschicht kann eine Lackschicht sein; sie besteht aber, dem Stand der Technik entsprechend, bevorzugt aus einer eingefärbten Thermoplastschicht. Der Thermoplast kann beispielsweise die gleiche oder eine ähnliche Zusammensetzung wie die Deckschicht aufweisen, eine Komponente hiervon enthalten oder ein anderes Polyamid bzw. ein anderes Polymeres, das entweder direkt auf der Deckschicht haftet oder mit Hilfe eines ausreichend transparenten Haftvermittlers (beispielsweise ein mit Carboxyl- bzw. Säureanhydridgruppen oder mit Epoxidgruppen funktionalisiertes Polyolefin, ein thermoplastisches Polyurethan oder ein Blend aus den Bestandteilen der zu verbindenden Schichten) haftend verbunden ist. Als Farbmittel können z. B. organische Farbstoffe, anorganische bzw. organische Pigmente oder Metallflitter eingesetzt werden.
3. Die Folie enthält neben Deckschicht und gegebenenfalls Farbschicht eine weitere Schicht, die als Trägerschicht eine ausreichende mechanische Festigkeit und gegebenenfalls zusätzlich eine Anbindung an das Substrat bewirkt.
4. Die Folie enthält neben Deckschicht und gegebenenfalls Farbschicht noch eine untenliegende Haftvermittlerschicht zur Anbindung an das Substrat. Geeignete Haftvermittler sind beispielsweise ein mit Carboxyl- bzw. Säureanhydridgruppen oder mit Epoxidgruppen funktionalisiertes Polyolefin, ein thermoplastisches Polyurethan, ein Blend aus den Materialien der zu verbindenden Schicht und des Substrats oder einer der in der deutschen Patentanmeldung Nr. 102004029217.5 vom 16.06.2004 offenbarten Haftvermittler.
5. Die Folie enthält neben Deckschicht, gegebenenfalls Farbschicht und Trägerschicht noch eine untenliegende Haftvermittlerschicht zur Anbindung an das Substrat. Für den Haftvermittler gilt das gleiche wie unter Punkt 4.
6. Die Folie, z. B. eine unter Punkt 1 bis 5, enthält bei Bedarf, z. B. bei erhöhten Anforderungen an die Kratzfestigkeit, auf der Deckschicht noch eine Schutzschicht, beispielsweise einen Klarlack auf Polyurethanbasis. Eine Schutzschicht in Form eines Lackes kann zur Erhöhung der Kratzfestigkeit gemäß dem Stand der Technik auch modifiziert sein. Daneben ist es auch möglich, auf dem Bauteil eine Schutzschicht über Verfahren der Vakuumabscheidung zu generieren. Die Folie kann gegebenenfalls auch eine abziehbare Schutzfolie auflaminiert enthalten, die als Transport- oder Montageschutz wirkt und beispielsweise nach der Herstellung des Verbundteils abgezogen wird.

Für die Ausführungsformen 2 bis 6 gilt, dass zunächst die transparente Deckschicht wie eine Monofolie von einer Seite oder von beiden Seiten her bedruckt werden kann, um dann in einem zweiten Schritt mit den übrigen Schichten zur Mehrschichtfolie verbunden zu werden. In mehrschichtigen, z. B. durch Coextrusion hergestellten Folien kann die transparente Deckschicht von oben her bedruckt werden. Die Deckschicht kann auch transparent oder deckend eingefärbt sein.

In einer bevorzugten Ausführungsform enthält die Farbschicht und/oder die Trägerschicht eine Formmasse, insbesondere eines Polyetheramids oder eines Polyetheresteramids, und vorzugsweise eines Polyetheramids oder Polyetheresteramids auf Basis eines linearen aliphatischen Diamins mit 6 bis 18 und bevorzugt 6 bis 12 C-Atomen, einer linearen aliphatischen oder einer aromatischen Dicarbonsäure mit 6 bis 18 und bevorzugt 6 bis 12 C-Atomen und eines Polyethers mit mehr als durchschnittlich 2,3 C-Atomen pro Sauerstoffatom und einer zahlenmittleren Molmasse von 200 bis 2 000. Die Formmasse dieser Schicht kann weitere Blendkomponenten enthalten wie z. B. Polyacrylate oder Polyglutarimide mit Carboxyl- bzw. Carbonsäureanhydridgruppen oder Epoxidgruppen, einen funktionelle Gruppen enthaltenden Kautschuk und/oder ein Polyamid. Derartige Formmassen sind Stand der Technik; sie sind beispielsweise in der EP 1 329 481 A2 und der DE-OS 103 33 005 beschrieben, auf die hier ausdrücklich Bezug genommen wird. Um eine gute Schichtenhaftung zu gewährleisten, ist es vorteilhaft, wenn hier der Polyamidanteil des Polyamidelastomeren aus den gleichen Monomeren aufgebaut ist, wie sie in einer der Komponenten der Deckschicht verwendet werden. Dies ist aber nicht zwingend erforderlich, um eine gute Haftung zu erreichen. Alternativ zum Polyamidelastomeren kann die Farbschicht und/oder die Trägerschicht neben einem Polyamid auch einen üblichen schlagzähmachenden Kautschuk enthalten. Vorteilhaft an diesen Ausführungsformen ist, dass in vielen Fällen ein Thermoformen der Folie als separater Schritt vor dem Hinterspritzen nicht notwendig ist, da die Folie durch das Hinterspritzen gleichzeitig auch umgeformt wird.

Die Folie bzw. Mehrschichtfolie mit der erfindungsgemäßen Deckschicht hat in einer bevorzugten Ausführungsform eine Dicke von 0,02 bis 1,2 mm, besonders bevorzugt von 0,05 bis 1 mm, ganz besonders bevorzugt von 0,1 bis 0,8 mm und insbesondere bevorzugt von 0,2 bis 0,6 mm. Handelt es sich um eine mehrschichtige Folie, besitzt die erfindungsgemäße Deckschicht in einer bevorzugten Ausführungsform eine Dicke von 0,01 bis 0,5 mm, besonders bevorzugt von 0,02 bis 0,3 mm, ganz besonders bevorzugt von 0,04 bis 0,2 mm und insbesondere bevorzugt von 0,05 bis 0,15 mm. Die Folie wird mittels bekannter Methoden hergestellt, beispielsweise durch Extrusion, oder im Falle von mehrschichtigen Systemen durch Coextrusion oder Laminieren. Sie kann anschließend gegebenenfalls umgeformt werden.

Die stoffschlüssige Verbindung der Folie mit dem Substrat kann beispielsweise durch Verkleben, Verpressen, Laminieren, Coextrusion oder Hinterspritzen, Hinterschäumen oder Hinterpressen hergestellt werden. Zum Erreichen einer verbesserten Haftung kann die Folie zuvor beispielsweise beflammt oder mit einem Plasma behandelt werden. Vor der Bildung des Verbundes zwischen Folie und Substrat kann die Folie noch bearbeitet oder umgeformt werden, beispielsweise durch Thermoformen oder andere Verfahren. Die Oberfläche kann beispielsweise durch Prägen strukturiert werden. Eine Strukturierung der Oberfläche ist auch vorgelagert im Rahmen der Folienextrusion möglich, beispielsweise durch speziell gestaltete Walzen. Das erhaltene Verbundteil kann anschließend noch umgeformt werden.

Geeignete Substrate sind beispielsweise Formmassen basierend auf Polyolefinen, Polyamiden, Polyestern, Polycarbonaten, ABS, Polystyrol oder Styrolcopolymeren.

In einer bevorzugten Ausführungsform wird die erfindungsgemäße Folie als Deckschicht eines Folienverbundes zur Gestaltung bzw. Dekoration von Oberflächen an und in Automobilen und Nutzfahrzeugen verwendet, wobei die Folie haftend mit einem Kunststoff-Substrat verbunden ist. Das entsprechend gestaltete Bauteil kann flächig ausgeformt sein, wie etwa ein Karosserieteil, beispielsweise Dachmodul, Kotflügel, Motorhaube oder Tür. Daneben kommen auch Ausführungsformen in Frage, in denen längliche, mehr oder weniger gewölbte Bauteile erzeugt werden, etwa Verkleidungen, beispielsweise die Verkleidung sogenannter A-Säulen am Automobil oder Zier- und Blendleisten aller Art. Ein weiteres Beispiel sind Schutzverkleidungen für Türschwellen. Neben Anwendungen im Außenbereich des Kraftfahrzeuges können auch Bestandteile des Interieurs vorteilhaft durch die erfindungsgemäßen Folien dekoriert werden, insbesondere Zierelemente wie Leisten und Blenden, da auch im Innenraum Schlagzähigkeit und Beständigkeit gegenüber Chemikalien, beispielsweise Reinigungsmitteln, erforderlich ist.

In einer weiteren bevorzugten Ausführungsform wird die erfindungsgemäße Folie als Oberbelag für Sportgeräte, beispielsweise Schneebretter aller Art, wie Skier oder Snowboards, verwendet.

Die Folie kann darüber hinaus beispielsweise als Schutzfolie gegen Verschmutzung, UV-Strahlung, Witterungseinflüsse, Chemikalien oder Abrieb verwendet werden, als Sperrfolie an Fahrzeugen, im Haushalt, an Böden, Tunnels, Zelten und Gebäuden oder als Dekorträger etwa für Oberbeläge von Sportgeräten, Booten, Flugzeugen, im Haushalt oder an Gebäuden.

Die Erfindung wird im Folgenden beispielhaft erläutert.

### Herstellung der Ausgangspolyamide:

### 1. Herstellung von PA MXD6

Ein 100 l-Polykondensationsreaktor wurde mit folgenden Einsatzstoffen befüllt:

| | |
|---|---|
| 14,964 kg | m-Xylylendiamin |
| 16,058 kg | Adipinsäure |
| 19,618 kg | deionisiertes Wasser |
| 3,074 g | einer 50 %igen wässrigen Lösung von Hypophosphoriger Säure. |

Die Einsatzstoffe wurden in einer Stickstoffatmosphäre aufgeschmolzen und unter Rühren im geschlossenen Autoklaven auf ca. 180 °C erhitzt, wobei sich ein Innendruck von ca. 20 bar einstellte. Dieser Innendruck wurde 2 Stunden beibehalten; danach wurde die Schmelze unter kontinuierlichem Entspannen auf Normaldruck weiter auf 280 °C aufgeheizt. Anschließend wurde unter Beibehaltung der 280 °C ca. 1 Stunde Stickstoff über die Schmelze geleitet, bis das gewünschte Drehmoment angezeigt wurde. Danach wurde die Schmelze mittels Zahnradpumpe ausgetragen und als Strang granuliert. Das Granulat wurde 16 Stunden unter Wasserstrahlvakuum bei 80 °C getrocknet.
Austrag: 22,7 kg
Das Produkt wies folgende Kennwerte auf:

| | |
|---|---|
| Kristallitschmelpunkt Tₘ: | 243 °C (gemäß DIN 53765) |
| Relative Lösungsviskosität ηᵣₑₗ: | 1,59 (gemäß DIN EN ISO 307) |

### 2. Herstellung von PA MXD10

Ein 100 l-Polykondensationsreaktor wurde mit folgenden Einsatzstoffen befüllt:

| | |
|---|---|
| 11,751 kg | m-Xylylendiamin |
| 17,449 kg | 1.10-Decandisäure (Sebacinsäure) |
| 18,326 kg | deionisiertes Wasser |
| 3,281 g | einer 50 %igen wässrigen Lösung von Hypophosphoriger Säure. |

Es wurde wie oben vorgegangen.
Austrag: 21,3 kg
Das Produkt wies folgende Kennwerte auf:

| | |
|---|---|
| Kristallitschmelpunkt Tₘ: | 188 °C |
| Relative Lösungsviskosität ηᵣₑₗ: | 1,65 |

### 3. Herstellung von PA MXD12

Ein 100 l-Polykondensationsreaktor wurde mit folgenden Einsatzstoffen befüllt:

| | |
|---|---|
| 11,441 kg | m-Xylylendiamin |
| 19,347 kg | 1.12-Dodecandisäure |
| 19,57 kg | deionisiertes Wasser |
| 3,17 g | einer 50 %igen wässrigen Lösung von Hypophosphoriger Säure. |

Es wurde wie oben vorgegangen.
Austrag: 24 kg
Das Produkt wies folgende Kennwerte auf:

| | |
|---|---|
| Kristallitschmelpunkt Tₘ: | 183 °C |
| Relative Lösungsviskosität ηᵣₑₗ: | 1,58 |

### 4. Herstellung von PA MXD 13

Ein 100 l-Polykondensationsreaktor wurde mit folgenden Einsatzstoffen befüllt:

| | |
|---|---|
| 11,761 kg | m-Xylylendiamin |
| 21,100 kg | 1.13-Tridecandisäure (Brassylsäure) |
| 21,76 kg | deionisiertes Wasser |
| 3,373 g | einer 50 %igen wässrigen Lösung von Hypophosphoriger Säure. |

Es wurde wie oben vorgegangen.
Austrag: 24,1 kg

Das Produkt wies folgende Kennwerte auf:

| | |
|---|---|
| Kristallitschmelpunkt Tₘ: | 167 °C |
| Relative Lösungsviskosität ηᵣₑₗ: | 1,57 |

### 5. Herstellung von PA MXD 14

Ein 100 l-Polykondensationsreaktor wurde mit folgenden Einsatzstoffen befüllt:

| | |
|---|---|
| 12,939 kg | m-Xylylendiamin |
| 24,544 kg | 1.14-Tetradecandisäure |
| 11,11 kg | deionisiertes Wasser |
| 3,88 g | einer 50 %igen wässrigen Lösung von Hypophosphoriger Säure. |

Es wurde wie oben vorgegangen.
Austrag: 31,2 kg

Das Produkt wies folgende Kennwerte auf:

| | |
|---|---|
| Kristallitschmelpunkt Tₘ: | 183 °C |
| Relative Lösungsviskosität ηᵣₑₗ: | 1,60 |

### 6. Herstellung von PA MXD18

Ein 100 l-Polykondensationsreaktor wurde mit folgenden Einsatzstoffen befüllt:

| | |
|---|---|
| 10,880 kg | m-Xylylendiamin |
| 25,120 kg | 1.18-Octadecandisäure |
| 9,08 kg | deionisiertes Wasser |
| 4,14 g | einer 50 %igen wässrigen Lösung von Hypophosphoriger Säure. |

Es wurde wie oben vorgegangen.
Austrag: 29,5 kg

Das Produkt wies folgende Kennwerte auf:

| | |
|---|---|
| Kristallitschmelpunkt Tₘ: | 173 °C |
| Relative Lösungsviskosität ηᵣₑₗ: | 1,56 |

### 7. Herstellung von Co-PA MXD12/PXD12

Ein 100 l-Polykondensationsreaktor wurde mit folgenden Einsatzstoffen befüllt.

| | |
|---|---|
| 8,174 kg | m-Xylylendiamin |
| 3,407 kg | p-Xylylendiamin |
| 19,577 kg | 1.12-Dodecandisäure |
| 19,86 kg | deionisiertes Wasser |
| 3,230 g | einer 50 %igen wässrigen Lösung von Hypophosphoriger Säure. |

Es wurde wie oben vorgegangen.
Austrag: 24,9 kg

Das Produkt wies folgende Kennwerte auf:

| | |
|---|---|
| Kristallitschmelpunkt Tₘ: | 197 °C |
| Relative Lösungsviskosität ηᵣₑₗ: | 1,55 |

### Verarbeitung

### 1. Compoundierung

Die hergestellten Polyamide wurden, gegebenenfalls zusammen mit den in den Tabellen angegebenen Polyamiden, mit 0,75 Gew.-% eines Stabilisatorgemisches und 0,05 Gew.-% eines Nukleierungsmittels (jeweils bezogen auf das Polyamid), auf einem Doppelschneckenkneter des Typs Werner + Pfleiderer ZSK 30 mit einer Zylindertemperatur von 240 °C (PA MXD6: 280 °C) bei 150 UpM und einem Durchsatz von 20 kg/Stunde compoundiert.

### 2. Folienextrusion

Die Herstellung der Monofolien erfolgte auf einer Anlage der Firma Collin mit einer Abzugsgeschwindigkeit von 2,5 m/min im Chillrollverfahren bei einer Massetemperatur von 250 °C (PA MXD6: 280 °C). Mehrschichtfolien wurden auf einer Collin-Mehrschichtfolienanlage mit einer Kalandereinheit des Typs 168/400 nach dem Kalanderverfahren hergestellt.

### 3. Hinterspritzen

Die Folien wurden für den Waschbürstentest sowie die Prüfung auf Kratzfestigkeit auf einer Spritzgießmaschine des Typs Engel Victory 540/200 in einem hochglänzenden Werkzeug mit einer PA12-Formmasse hinterspritzt. Die Abmessungen der Platten betrugen 150 x 105 x 3 mm.

### Prüfungen der Monofolien auf Chemikalienbeständigkeit

Die Prüfungen der Testsubstanzen erfolgte in einem Gradientenofen Typ 2610 (Hersteller: BYK Gardner). Um die Wärmeleitfähigkeit zu fördern, wurden die Folien von hinten mit selbstklebender Aluminiumfolie versehen. Unmittelbar nach dem Auftragen der Chemikalien wurden die Folien direkt auf das durch Gradienten stufenweise beheizte Ceranfeld gelegt. Der Schlitten des Gradientenofens fuhr bei Start auf die Folie und drückte vorne und hinten mit einer schmalen Kante die Folie auf die Heizfläche. Nach 30 Minuten fuhr der Schlitten zurück, die Folie wurde von der Heizfläche entfernt und gereinigt. Die visuelle Beurteilung der Folien erfolgte 1 Stunde nach Durchführung und erneut 24 Stunden nach Durchführung. Das Ergebnis nach 24 Stunden stellte den gültigen Wert dar; siehe Tabelle 1. Die angegebenen Werte sind die Temperaturen, bei denen bei visueller Beurteilung erste Veränderungen der Oberfläche erkennbar waren.

Man erkennt, dass die erfindungsgemäßen Folien gegenüber Substanzen, die für Automobilaußenteile relevant sind, eine deutlich verbesserte Beständigkeit besitzen.

### Messung der Glanzwerte

Die Messungen wurden gemäß DIN 67530 an Mehrschichtfolien durchgeführt; Einzelheiten sind aus der Tabelle 2 ersichtlich. Verglichen wurde mit einer Mehrschichtfolie, deren Deckschicht aus PA12 bestand. Man erkennt, dass erfindungsgemäß der Glanz deutlich verbessert ist.

### Messung der Transmission

Die Transmission wurde an Monofolien der Dicke 50 µm gemäß ISO 13468-2 gemessen; siehe Tabelle 3. Man erkennt, dass die Transparenz der von PA12 vergleichbar ist und daher für die in Frage kommende Anwendung vollkommen ausreicht.

### Waschbürstenbeständigkeitstest

Hinterspritzte Mehrschichtfolien wurden im Waschbürstenbeständigkeitstest nach Amtec-Kistler, DIN 55668:2002-08 geprüft. Die Ergebnisse sind in der Tabelle 4 dargestellt. Man erkennt, dass bei den erfindungsgemäßen Folien bzw. Verbundteilen eine deutlich geringere Schädigung eintritt.

### Messung der Kratzfestigkeit

Nach einer Degussa-internen Hausmethode wurde der Oberflächenglanz an hinterspritzten Mehrschichtfolien vor und nach einem Kratztest bestimmt. Hierbei wurde ein Abrieb-Prüfgerät gemäß Renault V. I. Lastenheft 31.03.406/A, Ausgabe 94-06 verwendet. Zunächst wurde an dem zu prüfenden Probekörper an verschiedenen Stellen der Glanz gemessen. Dann wurde der Probekörper waagerecht in die dafür vorgesehene Halterung eingebaut. Die zwei Stempel an der Unterseite der Hebelarme wurden mit einem Siebgewebe aus Polyamid (25 µm Maschenweite) bespannt, das mit 0,1 %iger Persillösung benetzt wurde. Die Hebelarme mit den Reibstempeln wurden anschließend umgeschwenkt, so dass die Stempel auf dem Probekörper auflagen, und mit je einem Zusatzgewicht von 3 kg versehen. Dann wurde der Probekörper mit 80 Doppelhüben hin und her bewegt, wobei die Stempel auf der Oberfläche kratzten. An den gekratzten Stellen wurde anschließend wieder der Glanz gemessen. Die Ergebnisse sind in der Tabelle 5 dargestellt. Man erkennt, dass die erfindungsgemäßen Folien bzw. Verbundteile eine wesentlich höhere Kratzfestigkeit im Vergleich zu einer PA12-Oberfläche aufweisen.

**Tabelle 1:Messung der Chemikalienbeständigkeit an einer 250 µm-Monofolie**

| | Vergleichsbeispiel 1 | Beispiel 1 PA | Beispiel 2 |
|---|---|---|---|
| | PA MXD6 | MXD12/PA612 90 : 10^{a)} | PA MXD14 |
| Deionisiertes Wasser | 61 | 74 | 74 |
| 1 %ige Schwefelsäure | 45 | 54 | 52 |
| Pankreatin^{b)} | 33 | 74 | 49 |
| Baumharz | 46 | 74 | 74 |

| | | | |
|---|---|---|---|
| ^{a)} 90 Gew.-Teile PA MXD12, 10 Gew.-Teile VESTAMID^{®} D16 ^{b)} Modellsubstanz für Vogelkot | | | |

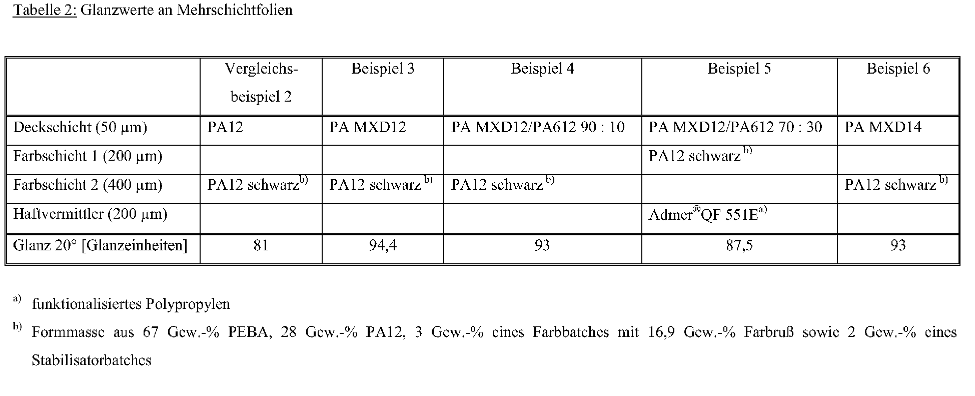

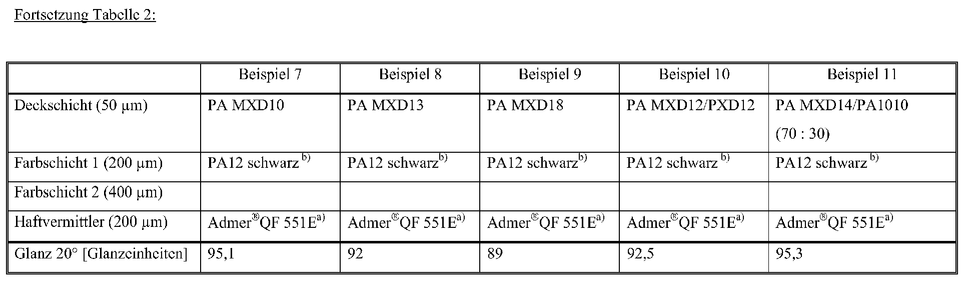

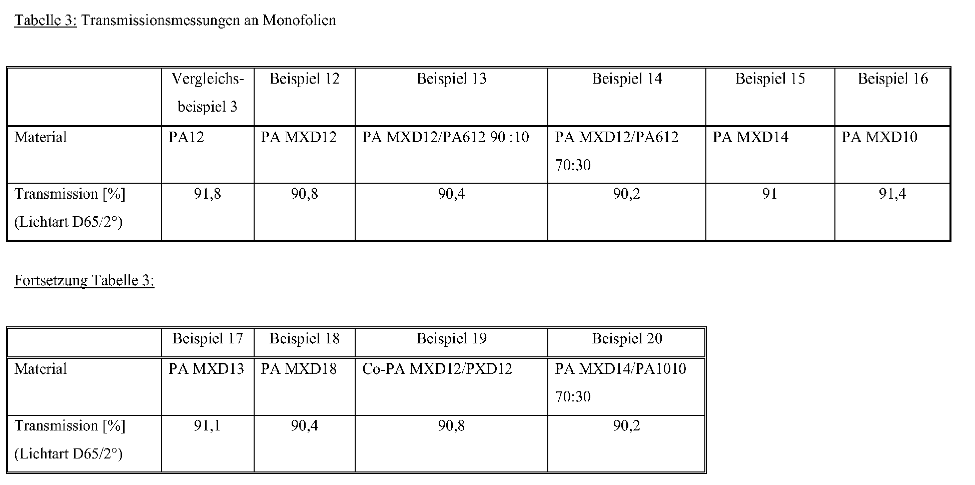

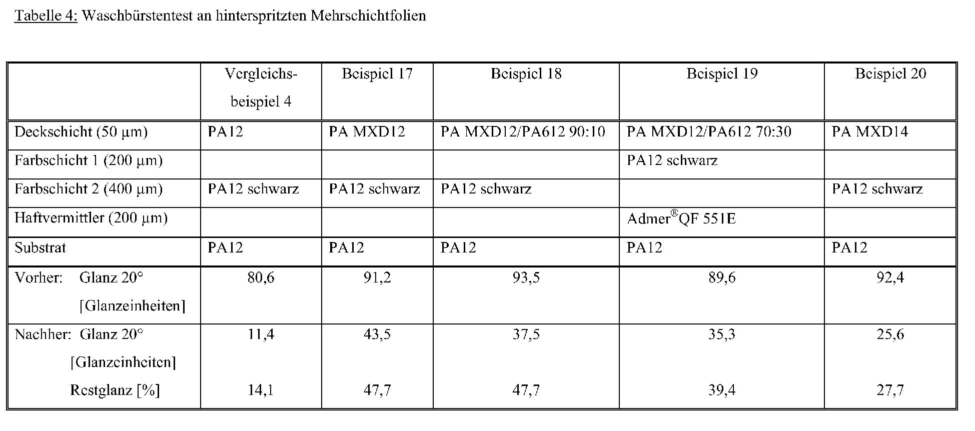

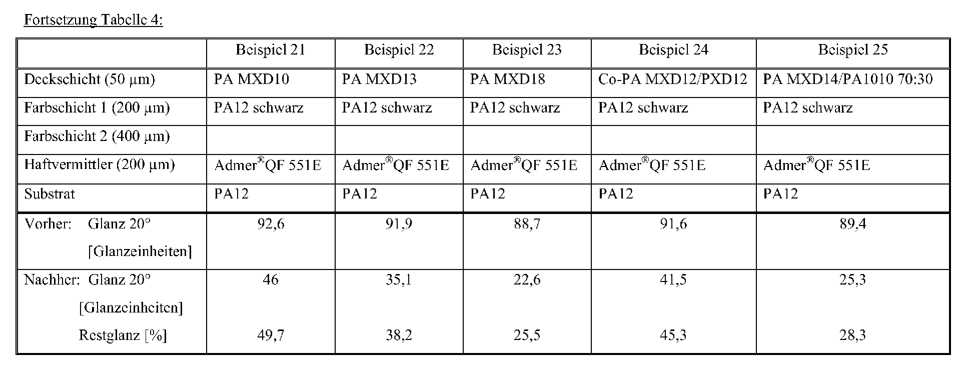

**Tabelle 5: Kratzfestigkeit an hinterspritzten Merhschichtfolien**

| | Vergleichs beispiel 5 | Beispiel 26 | Beispiel 27 | Beispiel 28 |
|---|---|---|---|---|
| Deckschicht (50 µm) | PA12 | PA MXD12/PA612 90:10 | PA MXD12/PA612 70:30 | PA MXD14/PA1010 70:30 |
| Farbschicht 1 (200 µm) | | | PA12 schwarz | PA12 schwarz |
| Farbschicht 2 (400 µm) | PA12 schwarz | PA12 schwarz | | |
| Haftvermittler (200 µm) | | | Admer®QF 551E | Admer®QF 551E |
| Substrat | PA12 | PA12 | SABIC STAMAX^{®}30YM240^{a)} | SABIC STAMAX^{®}30YM240^{a)} |
| Vorher: Glanz 20° [Glanzeinheiten] | 82,7 | 92,3 | 90 | 88,5 |
| Nachher: Glanz 20° [Glanzeinheiten] | 2,4 | 65,2 | 54,5 | 40,5 |
| Restglanz [%] | 2,9 | 70,6 | 60,6 | 45,8 |

| | | | | |
|---|---|---|---|---|
| ^{a)} eine Formmasse aus isotaktischem Polypropylen mit 30 Gew.-% Glasfaser | | | | |

## Patentansprüche

1. Dekorfolie, deren Deckschicht aus einer Polyamidzusammensetzung besteht, die folgende Komponenten enthält:
a) 50 - 100 Gew.-Teile Polyamid, das aus folgenden Monomeren herstellbar ist: α) 70 - 100 Mol-% Diamin, ausgewählt aus m-Xylylendiamin, p-Xylylendiamin und Mischungen hiervon,
β) 0 - 30 Mol-% anderer Diamine mit 6 bis 14 C-Atomen,
wobei sich die Mol-%-Angaben hier auf die Summe an Diamin beziehen, sowie
γ) 70 - 100 Mol-% aliphatischer Dicarbonsäuren mit 10 bis 18 C-Atomen und
δ) 0 - 30 Mol-% anderer Dicarbonsäuren mit 6 bis 9 C-Atomen,
wobei sich die Mol-%-Angaben hier auf die Summe an Dicarbonsäure beziehen;
b) 0 - 50 Gew.-Teile eines anderen Polyamids,
wobei sich die Gewichtsteile von a) und b) zu 100 addieren.

2. Dekorfolie gemäß Anspruch 1,
**dadurch gekennzeichnet,**
**dass** die Komponente a) α) aus mindestens 50 Gew.-% m-Xylylendiamin und maximal 50 Gew.-% p-Xylylendiamin besteht.

3. Dekorfolie gemäß Anspruch 1,
**dadurch gekennzeichnet,**
**dass** die Komponente a) α) aus mehr als 50 Gew.-% p-Xylylendiamin und weniger als 50 Gew.-% m-Xylylendiamin besteht.

4. Dekorfolie gemäß einem der vorhergehenden Ansprüche, die nur aus dieser Schicht besteht.

5. Dekorfolie gemäß einem der Ansprüche 1 bis 3, die aus mehreren Schichten besteht.

6. Dekorfolie gemäß Anspruch 5,
**dadurch gekennzeichnet,**
**dass** sie eine Farbschicht, eine Trägerschicht und/oder eine Haftvermittlerschicht enthält.

7. Dekorfolie gemäß Anspruch 6,
**dadurch gekennzeichnet,**
**dass** die Farbschicht und/oder die Trägerschicht ein Polyamidelastomer oder einen schlagzähmachenden Kautschuk enthält.

8. Dekorfolie gemäß einem der vorhergehenden Ansprüche,
**dadurch gekennzeichnet,**
**dass** sie eine Dicke von 0,02 bis 1,2 mm aufweist.

9. Dekorfolie gemäß einem der Ansprüche 1 bis 3 sowie 5 bis 8,
**dadurch gekennzeichnet,**
**dass** die Deckschicht eine Dicke von 0,01 bis 0,5 mm aufweist.

10. Folie gemäß einem der vorhergehenden Ansprüche,
**dadurch gekennzeichnet,**
**dass** sie durch Extrusion, Coextrusion oder Laminieren hergestellt und anschließend gegebenenfalls umgeformt wird.

11. Verbundteil, zusammengesetzt aus einer Folie gemäß einem der Ansprüche 1 bis 10 und einem Substrat.

12. Verbundteil gemäß Anspruch 11,
**dadurch gekennzeichnet,**
**dass** es ein Karosserieteil eines Kraftfahrzeuges, ein Bestandteil des Kraftfahrzeug-Innenraumes, eine Verkleidung, eine Zierleiste, eine Blendleiste, eine Blende oder ein Dekorationselement ist.

13. Verbundteil gemäß Anspruch 11, **dadurch gekennzeichnet, dass** es ein Sportgerät ist.

14. Verbundteil gemäß einem der Ansprüche 11 bis 13,
**dadurch gekennzeichnet,**
**dass** es durch Verkleben, Verpressen, Laminieren, Coextrusion, Hinterspritzen, Hinterschäumen oder Hinterpressen hergestellt wird.
